# EUROPEAN PATENT SPECIFICATION

(11) **EP 1 082 533 B1**
(45) Date of publication and mention of the grant of the patent: **28.08.2002**
(21) Application number: 98933987.4
(22) Date of filing: 26.05.1998
(51) Int. Cl.: F02D 41/14, F02D 41/40

(54) **SYSTEM AND METHOD FOR CONTROLLING FUEL INJECTION IN COMBUSTION ENGINES**
SYSTEM UND METHODE ZUR REGELUNG DER KRAFTSTOFFEINSPRITZUNG BEI VERBRENNUNGSMOTOREN
SYSTEME ET PROCEDE PERMETTANT DE COMMANDER L'INJECTION DE CARBURANT DE MOTEURS A COMBUSTION

(43) Date of publication of application: 14.03.2001
(73) Proprietor: Mecel AB, 662 22 Amal (SE); Delphi Technologies, Inc., Troy, MI 48007 (US)
(72) Inventor: GLAVMO, Magnus, L-8872 Mamer (LU); SPADAFORA, Peter, L-2241 Limpertsberg (LU)
(74) Representative: Denton, Michael John
(86) International application number: SE9801000
(87) International publication number: WO99061771

(56) References cited:
- EP-A1- 0 834 652
- EP-A2- 0 864 738
- WO-A1-86/00961
- US-A- 4 760 830

## Description

This invention relates to an system in accordance with the preamble of patent claim 1 and a method in accordance with the preamble of patent claim 6.

### Prior art

Ionisation current detection in the combustion chamber of a diesel engine is known from several publications.
In US,A,4377140 is described a solution wherein the end of the combustion phase is detected by Ionisation current detection. The main solution shows a spark plug having an additional measuring gap integrated in the spark plug, where the ionisation measurements are made when less than 5% of the total charge has attained ignition. In one alternative embodiment could also this technology be implemented in a diesel engine, where the injection timing could be controlled based upon said measurements of the end of the ignition phase.
In US,A,4760830 (=EP,B,71557) is a solution for a compression ignition engine shown, where the start of combustion is detected by different suggested methods, one of the methods being detection of ionisation. The specific ionisation sensor is designed such that the combustion gases is forced to flow along a gradually decreasing cross section, thus creating a self-cleaning effect avoiding any build up of carbon deposits.
Yet another solution for diesel engine is shown in US,A,4739731 (=EP,B,190206), where the ionisation sensor is integrated with the glow-plug and where the glow-plug is arranged in a precombustion chamber. This patent describes in detail the ionisation potentials for different combustion components (i.e. CO, NOₓ e.t.a.), and that the bias voltage should be selected such that the bias voltage does only cause ionisation due to soot formation.
In SAE technical Paper 933873, is also briefly discussed the potential for implementing ionisation detection in the combustion chamber of a diesel engine.

### Object of the invention

An object of the present invention is to enable correct control and verification of successful pilot fuel injection for each individual fuel injector, and that a successful pilot injection is obtained from each injector in a reliable manner for consecutive combustion's.

Another object with a further developed embodiment is that the fuel amount delivered during pilot injection could be controlled in a closed loop manner, such that the minimum amount of fuel for successful pilot injection is found for each individual fuel injector.

Yet another object with a further developed embodiment is that the pilot fuel injection could be matched to the main fuel injection, using information from the ionisation caused by each injection event, i.e. both from pilot and main injection, such that an optimum total efficiency is obtained from the combustion within the combustion chamber.

### Short description of the invention

In order to obtain these objects is the inventive system characterised by the features stated in the characterising clause of claim 1. The inventive method is characterised for the same reasons by the characterising clause of claim 6.

Other distinguishing features and advantages of the invention are evident from the characterising part of dependent claims and following description of embodiments. Description of embodiments is made by reference to figures specified in following list of figures.

### List of Figures

Figure 1, shows schematically an engine with the inventive system for controlling fuel injection, having ionisation detection means,
Figure 2, shows a schematic block diagram for the ionisation detection means,
Figure 3, shows sequentially obtained values from the pilot injection phase and the main injection phase for cylinders 1,3,4 and 2,
Figure 4, shows how combustion pressure is developed within the combustion chamber vs. ionisation, for different amount of fuel being delivered during pilot injection .

### Description of an exemplary embodiment

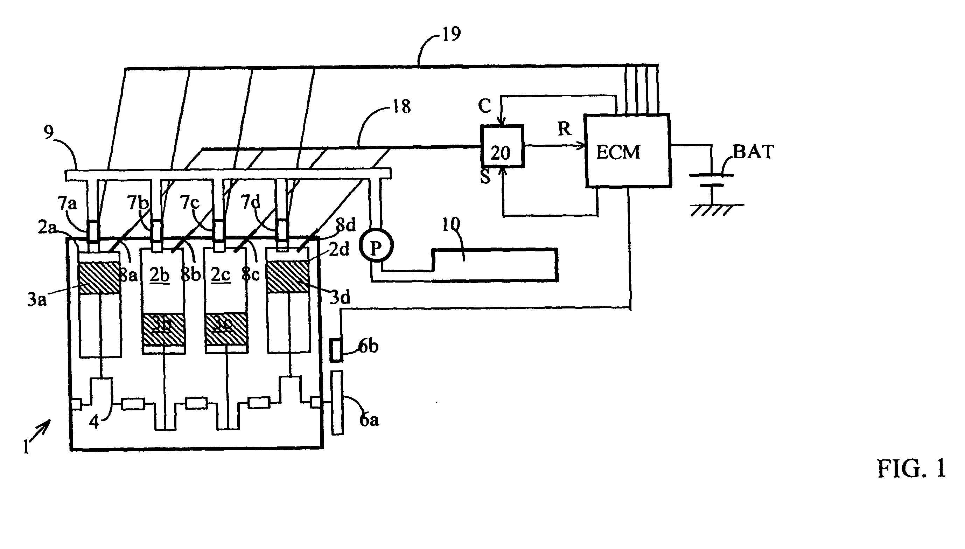

Figure 1 shows a four cylinder combustion engine 1. The combustion engine is preferably a compression ignited four cylinder engine, i.e. a Diesel engine. The cylinders are denoted with reference numbers 2a-2d, with its pistons 3a-3d. The pistons is connected to the crankshaft 4. At the end of the crankshaft is arranged a flywheel 6a, and the position of the crankshaft is detected by a sensor 6b, which in a common known fashion detects a cog on the flywheel for each full turn of the flywheel. The position of the crankshaft could be monitored in several ways, for example using a so called 58x, or 70x, flywheel, where the periphery of the flywheel is equipped with 60 respectively 72 evenly arranged cogs, but with two cogs missing creating a reference position.
In the shown embodiment is a fuel distribution system shown of the so called common rail type, having a common distribution rail 9 for pressurised fuel. The fuel is pressurised by a pump P, supplied from a tank 10. In the common rail system is the amount of fuel injected to each cylinder controlled by electromagnetic control valves 7a-7d, where the amount of fuel is controlled by the length or duration of the control pulse issued by the engine control unit ECM via injector driver harness 19, dependent of present operating conditions and driver demand(i.e. pedal position). These operating condition are mainly dictated by present speed, load and temperature of the engine. Also other parameters such as pressure in the distribution rail 9 and EGR-amount could also have an impact upon the amount of fuel being delivered.

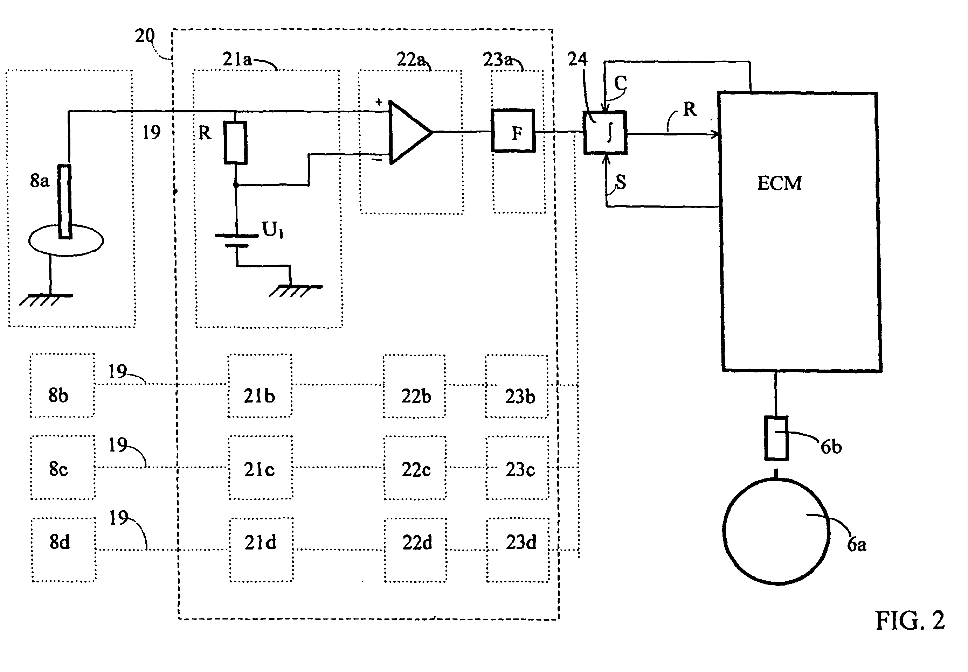

In the present inventive embodiment is also ionisation probes 8a-8d arranged within each combustion chamber. Each ionisation probe deliver a cylinder specific value from each combustion event through the ionisation probe harness 18 to a ionisation current detection unit 20. This ionisation current detection unit is described in more detail in figure 2.
In figure 2 is shown in detail one ionisation probe 8a. The ionisation probe is biased by a measuring voltage from a measuring voltage source U₁ via a measuring resistance R, in the section 21a included in the ionisation current detection unit 20 as shown in figure 1. This measuring voltage is preferably in the order of some volts, i.e. in the range of 3-10 volts, preferably 5 volts. The bias voltage should be selected carefully such that the probe would not be subject to extensive build up of soot, which could be caused by increased bias voltage.
The ionisation probe could also be integrated in a glow plug. In a ceramic glow plug could an ionisation electrode be embedded into the ceramic body of the glow plug in parallel with the heating coil of the glow plug. The heating coil could also be used as the ionisation electrode, where an ionisation detection is enabled when the heating function is disabled, and the heating coil instead is used as a biased probe. If a sheathed glow plug is used could instead the protective sheathing be used as the ionisation probe, if the protective sheathing is electrically insulated in relation to the heating coil and glow plug housing.

When an ionisation is developed within the combustion chamber, due to combustion, then a current is developed in the circuit U₁-R-8a-electrical ground and back to U₁. The order of the ionisation current is detected and amplified in section 22a of the ionisation current detection unit 20. The amplification is made by using a differentiating amplifier. The output from section 22a is passed through a filter F. The filter could be of a so called low-pass filter, which smoothen the signal and could quench any disturbances having a very short duration, not characteristic for a combustion event in progress. The threshold of the low-pass filter could be set to some kHertz, preferably 15 kHertz.

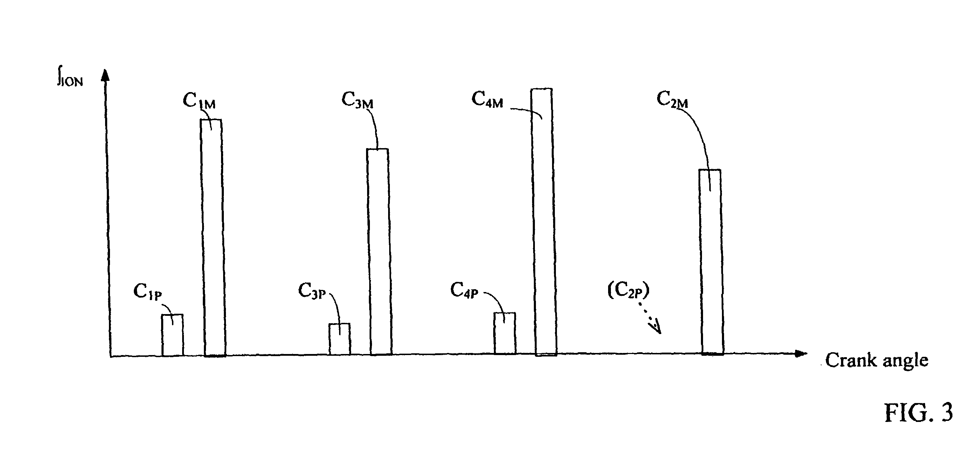

An essential part of the invention is the handling of ionisation current detection in multiple sequences during one and the same combustion cycle. In the section 24 could an integration of the amplified and filtered ionisation signal be obtained in an controlled manner dependent of the current position of the engine in the combustion cycle. The current position of the engine, i.e. the position of the piston, as measured in crankshaft angles, could be monitored continuously by the signals from the flywheel sensor 6b.
The control of section 24 will be described with reference to figure 3. When the piston in cylinder 1, i.e. cylinder 2a in figure 1, approach the top dead centre position (TDC), in its compression stroke is fuel injected into the cylinder in a so called pilot injection phase. This pilot injection is initiated in order to reduce the combustion noise, but have also a reducing effect upon formation of NOₓ-emissions, due to that the peak combustion temperature will be reduced. Before the pilot injection is initiated by the ECM is the integrator in section 24 reset by the ECM on output C, and the integration could be started by the ECM by a signal on control output S, which controls the duration of the integration, i.e. the measuring window during which the integration takes place. Start of integration could preferably be initiated synchronously with detected start of pilot fuel combustion, and ended shortly after termination of pilot fuel combustion. In an alternative embodiment could start of fuel injection be used as an initiator for start of integration, correspond to the first request for start of the electrical injector driver pulse issued by the ECM. and possibly corrected by some empirically determined start of combustion delay. The start of injection is normally occurring after a short delay, due to electrical and mechanical delays of the injector, and in some implementations could also start of integration be initiated with a predetermined limited delay in comparison with the start of injector drive pulse. This predetermined limited delay should be selected such that it by margin is shorter than the fastest response of any individual injector of the injector design chosen.

The integrated value of the ionisation signal during pilot combustion as a result of pilot fuel injection could thereafter be read by the ECM on the R input, and as soon as the integrated value have been read is the integrator reset once again in preparation for the main fuel injection. When the main fuel injection is initiated is the integration process activated once again, and an integrated value of the ionisation signal during main combustion as a result of main fuel injection is obtained in a corresponding manner. In figure 3 is shown the integrated value obtained from the pilot injection phase C_{XP} and main injection phase C_{XM}, from combustion in the cylinders, if the firing order is 1-3-4-2 of cylinders X, while the engine is operating in a steady-state and the injectors are activated with the same injector driver duration of the control pulse sent to the injectors from the ECM.
C_{1P} is thus the integrated value of the ionisation signal obtained as a result from pilot injection in cylinder 1 and C_{1M} is the integrated value of the ionisation signal as a result from main fuel injection in cylinder 1. C_{3P} is the integrated value of the ionisation signal obtained as a result from pilot injection in cylinder 3 and C_{3M} is the integrated value of the ionisation signal obtained as a result from main fuel injection in cylinder 3 and so on, assuming the firing order 1-3-4-2.

A verification of a successful pilot injection and establishment of an acceptance signal could be obtained in figure 3 from the pilot injection phase in cylinders 1,3 and 4, but no pilot injection could be verified from cylinder 2, and an non-acceptance signal is thus established for cylinder 2. This could often be the case if the amount of fuel to be delivered during pilot injection should be kept as low as possible. Due to different behaviour between injectors caused by tolerances set during manufacturing, could one and the same control pulse duration cause different amount of fuel to be delivered between injectors. A very short control pulse duration during pilot injection could thus result in that some injectors never even starts to open.
If cylinder balancing for pilot fuel injection is implemented using ion sense information, i.e. the integrated value, then it is important that essentially identical locations of start of combustion, i.e. timing thereof, occurs between successive combustion of the engine. In other words must start of combustion be detected within a narrow crankshaft angle range before top dead centre for all cylinders. Before cylinder balancing is initiated for pilot fuel injection, then this timing should be controlled and corrected, preferably using start of combustion detection using ion sense, before any cylinder balancing is initiated. The integrated value as a result of identical fuel amount for pilot fuel injection, could vary dramatically if different timings for start of pilot combustion occurs between cylinders.
In order to obtain a reliable pilot combustion also with minimum pilot fuel amounts and the required order of reduction in combustion noise, then only a minimum amount of missing pilot combustion could be tolerated. In some implementations could some 1-5 out of a hundred pilot combustion's be missing without causing to much noise. A single failed pilot injection could be tolerated, but a repeated failure rate of pilot combustion should be corrected by an incremental increase of the fuel amount delivered during pilot injection, i.e. most often corresponding to an incremental increase of the duration of the electrical control pulse to the specific injector unable to initiate a pilot combustion. The predetermined number of combustion's needed in order to initiate a correction of the fuel amount is selected in order to give a stable control system not hunting occasional disturbances and without undue waste of fuel.
According the invention is the ECM equipped with a corrective function, most often implemented in software, controlling at least the amount of fuel delivered during pilot fuel injection, whereby the ECM initiate an incremental increase of fuel amount to be delivered during next pilot fuel injection if a predetermined number or sequence of non-acceptance signals have been established. This predetermined number could correspond to some 3 or more consecutive combustion within a combustion chamber without a successful pilot injection. A sequence of failed pilot combustion causing an failure rate above 5% on an individual combustion chamber basis, or a failure rate above 5% on all combustion chambers of the engine, could establish the failure sequence initiating pilot fuel increase for the injectors concerned. The minimum fuel amount for pilot fuel injection could by default be determined empirically and stored in a map in the ECM, and the incremental increase of this mapped pilot fuel amount dependent of non-acceptance signals could be implemented as a corrective function only able to increase the mapped pilot fuel amount, such that a successful pilot fuel injection is obtained by all injectors in a reliable manner.

In a preferred implementation where the minimum amount of fuel for a reliable successful pilot fuel injection is sought for, could also this mapped minimum fuel amount for pilot fuel injection be optimised. According the invention is the ECM equipped with a corrective function, most often implemented in software, controlling at least the amount of fuel delivered during pilot fuel injection, whereby the ECM initiate an incremental decrease of fuel amount to be delivered during next pilot fuel injection, if a predetermined number of acceptance signals have been established by the ECM.
Such an optimising function could preferably be initiated during a so called steady state operation of the engine, during which steady state operation a large order of uninterrupted consecutive combustion's have been obtained with successful pilot combustion. The optimising function could be enabled at certain intervals, for example after some 10.000 km, which will allow the system to correct for wear and other changes in injector performance.

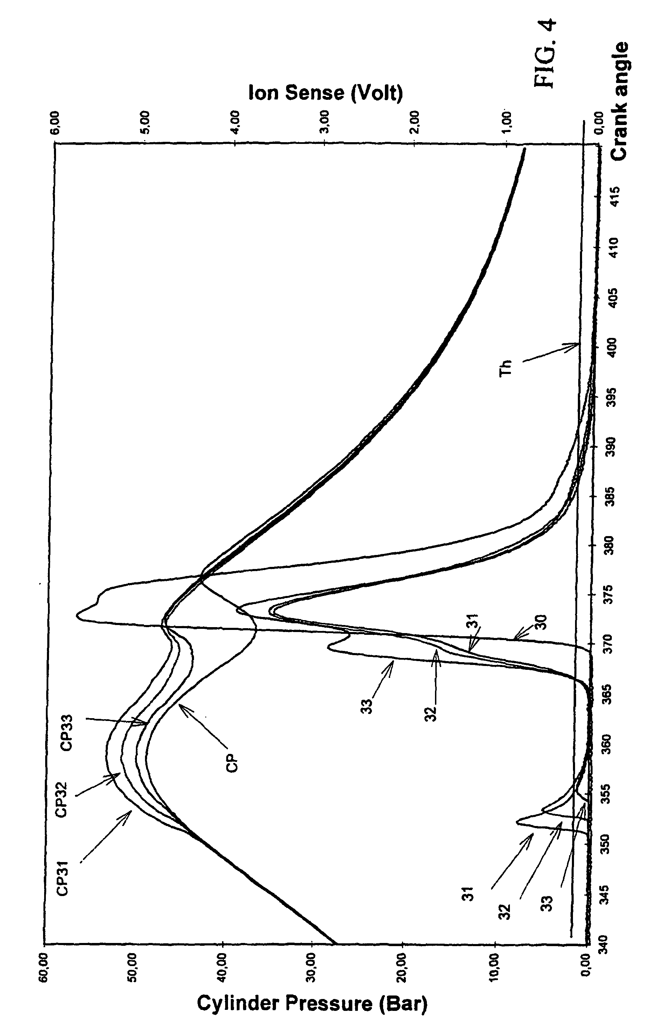

In figure 4 is shown averaged values of the ionisation signal (vertical axis on the right) versus averaged combustion pressure (vertical axis on the left), as a function of crank angle on the horizontal axis(i.e. engine position)for various amounts of fuel being injected during pilot injection at 1500 rpm and 32 Nm load, and where the average is obtained over 100 combustion cycles. These values have been obtained from a standard 4 cylinder passenger car diesel engine. During all combustion event have the same amount of fuel been delivered during the main injection phase, i.e. in this case 9.6 mm³.
The CP trace is the cylinder pressure within the combustion chamber as it is developed without any pilot injection. Trace 30 is the ionisation signal obtained during a combustion without pilot injection.
Trace 31 is the ionisation signal as developed with a pilot fuel injection in the order of 3.0 mm³, and CP31 corresponding pressure trace.
Trace 32 is the ionisation signal as developed with a pilot fuel injection in the order of 2.4 mm³ and delayed 2 crank angle degrees in comparison with trace 31, and CP32 corresponding pressure trace. Trace 33 is the ionisation signal as developed with a pilot fuel injection in the order of 1.5 mm³ and delayed 2 crank angle degrees in comparison with trace 32, and CP33 corresponding pressure trace. It could be clearly seen from the traces that an excessive amount of fuel being delivered during pilot injection phase causes increases of the cylinder pressure before TDC and thus a negative contribution to power efficiency. In order to obtain optimum efficiency should as much as possible of the combustion pressure be obtained some 10-20 crank angle degrees after TDC, TDC corresponding to 360 crank angles in figure 4.

The order of the ionisation signal have a very strong correspondence with the combustion temperature. If the ionisation signal from a combustion without pilot injection, i.e. trace 30, is compared with a combustion with verified successful pilot injection, i.e. either of traces 31,32 or 33, then it could be seen that the amount of fuel being delivered during pilot injection is less important.
Fuel amount for pilot fuel injection in the order of 1.5 mm³ gives an major reduction of the combustion temperature, and thus NOₓ-formation, as well as combustion noise. Increase of the fuel amount for pilot fuel injection to 2.4 mm³ and 3.0 mm³ tends to give a marginal effect.
Even a relatively small amount of pilot fuel amount in the order of 0.5 mm³ gives an important reduction of combustion temperature and combustion noise but such an small amount is difficult to obtain with state of the art injectors being able to deliver also the necessary amount of fuel during full load operation.
In some load cases of the engine could such an optimised minimum pilot fuel amount be desirable, i.e. the resulting pilot combustion causing the necessary reduction in combustion noise and any increase above this minimum amount only causing increase of fuel consumption. In most systems lacking feed-back information from a successful pilot fuel injection must this minimum fuel amount for pilot fuel injection be established with a certain margin in relation to the optimal pilot fuel amount. Most often is this minimum amount established by production tolerances between individual injectors, said minimum amount needed in order to obtain successful pilot combustion also from the worst possible injector produced, resulting in increase of specific fuel consumption of the engine.

Both the negative pressure obtained before TDC and less contribution to reduction of combustion temperature when using excessive amount of fuel for pilot injection, indicates that the amount of fuel being delivered during pilot injection should be kept at a minimum. The overall fuel consumption of the engine could with the invention be minimised while conforming to customer requirements as of combustion noise as well as conforming to emission reduction requirements from legislating bodies.

The integrator in section 24 could also be substituted by a peak and hold circuit, which could detect the peak value of the ionisation signal, said peak value being used to verify successful pilot injection and keep fuel amount for pilot injection at a minimum.
In figure 4 is shown a threshold Th, which could be used for purposes of verification of a successful pilot injection. When the amplitude of the ionisation signal obtained from pilot injection is above this threshold for a predetermined number of consecutive combustion's in a specific cylinder, could a incremental decrease of the amount of fuel being delivered during pilot injection be initiated. The decreased value could be maintained for a number of consecutive combustion's, and if the amplitude is still above this threshold, could a further incremental decrease be initiated. If the peak amplitude for a number of consecutive combustion's in a specific cylinder fall short of the threshold, is the fuel amount increased a predetermined incremental amount. A similar control scheme could be implemented using the integrated value. As long as the integrated value is above or under a predetermined threshold for a predetermined number of combustion's, could a incremental decrease respectively increase of the fuel amount be initiated.
The required predetermined number of combustion's could also be different for operation conditions such as steady state(substantially constant load and rpm) or heavy transient load cases, or intermediate operating conditions in-between. A steady state case could initiate correction after less number of combustion's, while a transient load case could require a larger number of consecutive combustion's showing the same tendency before correction is initiated.

The invention is not limited to the embodiment shown. In order to reduce susceptibility for carbon build up upon the probe could also an alternating voltage be applied at the probe, instead of the constant bias voltage as generated by section 21a. The invention is not limited to engines operating on diesel fuel, instead it could be implemented in all types of compression ignited engines where pilot injection is initiated in order to reduce combustion noise or reduce combustion temperatures.

In the preferred embodiment could start of integration or start of any peak-hold circuit be initiated by combustion process detection, i.e. using the ionisation detection means for detecting the start-of-combustion. Such a system could be less sensitive to different injector performance, and could also easier be implemented in different types of engines where the combustion process is different or where the ionisation probe is located at a distance from the fuel injection jet. The latter different types of engines could as an example be a pre-chamber combustion engine with fuel injectors located in the pre-chamber and ionisation probes being located in the main combustion chamber. The customary approach for designing fuel supply systems which conforms to stricter emission requirements as well as requirements on low fuel consumption have been focused upon tighter tolerances during manufacturing of injectors and fuel supply control systems. Also extensive testing of injectors and methods for matching injectors having similar performances together have been implemented in order to give a predictable behaviour between different cylinders of an engine.
The invention is an essential tool in order to give optimum performance also in systems where injectors are manufactured with less order of tolerances, and excludes need for matching of injectors for each engine.

## Claims

1. System for controlling fuel injection in combustion engines (1), for verification of and control of pilot fuel injection, where the pilot fuel injection is initiated before a piston in the combustion engine reaches Top Dead Centre (TDC) and at least one main fuel injection is initiated sequentially after and separated from said pilot fuel injection, **characterised in that** the system comprises
detecting means for detecting ionisation within the combustion chamber;
first measuring means measuring the order of ionisation within the combustion chamber during pilot injection, so that a first measured value is obtained being proportional to the order of ionisation during the pilot injection,
comparison means comparing said first measured value with a predetermined threshold, said comparison means establishing an acceptance signal if the first measured value is above the predetermined threshold, and establishing a non-acceptance signal if the first measured value is below the predetermined threshold,
fuel control means controlling at least the amount of fuel delivered during pilot fuel injection, so that the fuel control means initiate an incremental increase of fuel amount to be delivered during next pilot fuel injection, dependent of said non-acceptance signals established by said comparison means.

2. System according to claim 1 **characterised in that** the system comprises fuel control means for controlling at least the amount of fuel delivered during pilot fuel injection, whereby the fuel control means initiate an incremental increase of fuel amount to be delivered during next pilot fuel injection if a predetermined number or sequence of non-acceptance signals have been established by said comparison means.

3. System according to claim 2 **characterised in that** the system comprises fuel control means for controlling at least the amount of fuel delivered during pilot fuel injection, whereby the fuel control means initiate an incremental decrease of fuel amount to be delivered during next pilot fuel injection, if a predetermined number of acceptance signals have been established by said comparison means.

4. System according to claim 1 **characterised in that** the system comprises
second measuring means for measuring the order of ionisation within the combustion chamber during at least one main injection, whereby a second measured value is obtained being proportional to the order of ionisation during the main injection;
means for establishing the predetermined threshold used for the first measured value, said established predetermined threshold being dependent of the second measured value.

5. System according to claim 1 **characterised in that** the system comprises means for determining the position of the engine in the combustion cycle, wherein the first measured value is obtained during a measuring window which precedes a measuring window used for obtaining the second measured value, said measuring values being separated in time or crankshaft angles(i.e. engine position), and exclusively dependent of the ionisation during respective measuring window..

6. Method for controlling fuel injection in combustion engines (1), for verification of and control of pilot fuel injection, where the pilot fuel injection is initiated before a piston in the combustion engine reaches Top Dead Centre (TDC) and at least one main fuel injection is initiated sequentially after and separated from said pilot fuel injection, wherein at least one combustion chamber of the combustion engine is equipped with an ionisation sensor capable of detecting the degree of ionisation within the combustion chamber
**characterised in that** the method comprises the steps of;
detecting ionisation within the combustion chamber during pilot injection, whereby a first measured value is obtained being proportional to the order of ionisation in the combustion chamber during the pilot injection,
comparing said first measured value with a predetermined threshold, and establishing an acceptance if the first measured value is above the predetermined threshold, and establishing a non-acceptance if the first measured value is below the predetermined threshold;
controlling at least the amount of fuel being delivered during pilot fuel injection dependent of said non-acceptance signals established by said comparison means.

7. Method for controlling fuel injection in combustion engines (1) according to claim 6
**characterised in that** the method comprises the steps of;
controlling at least the amount of fuel being delivered to a combustion chamber during pilot fuel injection if a predetermined number or sequence of non-acceptance signals have been established by said comparison means for said combustion chamber, whereby said fuel amount for a following pilot fuel injection in said combustion chamber is increased incrementally.

8. Method for controlling fuel injection in combustion engines (1) according to claim 7
**characterised in that** the method comprises the steps of;
controlling at least the amount of fuel being delivered to a combustion chamber during pilot fuel injection if a predetermined number of acceptance signals have been established by said comparison means for said combustion chamber and for consecutive combustion's, whereby said fuel amount for a following pilot fuel injection in said combustion chamber is decreased incrementally.

9. Method for controlling fuel injection in combustion engines (1) according to claim 6 **characterised in that** the method comprises the steps of;
detecting also ionisation within the combustion chamber during main injection, whereby a second measured value is obtained being proportional to the order of ionisation during the main injection,
establishing a predetermined threshold for the comparison based upon the second measured value.

10. Method for controlling fuel injection in combustion engines (1) according to claim 9 **characterised in that** the predetermined threshold is established as a predetermined part of the second measured value, preferably in the range of 1-30 % of the second measured value.

## Patentansprüche

1. System zum Regeln der Kraftstoffeinspritzung in Verbrennungsmotoren (1) zum Verifizieren und Regeln der Kraftstoff-Voreinspritzung, wobei die Kraftstoff-Voreinspritzung eingeleitet wird, bevor ein Kolben in dem Verbrennungsmotor den oberen Totpunkt (OT) erreicht, und mindestens eine Kraftstoff-Haupteinspritzung sequentiell nach und getrennt von der Kraftstoff-Voreinspritzung eingeleitet wird, **dadurch gekennzeichnet, dass** das System folgendes umfasst:
Detektionsmittel zum Detektieren von Ionisierung in der Brennkammer;
erste Messmittel, die die Größenordnung der Ionisierung in der Brennkammer während der Voreinspritzung messen, so dass ein erster Meßwert erhalten wird, der proportional zu der Größenordnung der Ionisierung während der Voreinspritzung ist,
Vergleichsmittel, die den ersten Meßwert mit einer vorbestimmten Schwelle vergleichen, wobei die Vergleichsmittel ein Akzeptanzsignal erzeugen, wenn der erste Meßwert über der vorbestimmten Schwelle liegt, und ein Nichtakzeptanzsignal erzeugen, wenn der erste Meßwert unterhalb der vorbestimmten Schwelle liegt,
Kraftstoffregelmittel, die zumindest die Kraftstoffmenge, die während der Kraftstoff-Voreinspritzung zugeführt wird, so regeln, dass die Kraftstoffregelmittel abhängig von den durch die Vergleichsmittel erzeugten Nichtakzeptanzsignalen einen inkrementellen Anstieg der während der nächsten Kraftstoff-Voreinspritzung zuzuführenden Kraftstoffmenge einleiten.

2. System nach Anspruch 1,
**dadurch gekennzeichnet, dass** das System Kraftstoffregelmittel zum Regeln von mindestens der Kraftstoffmenge, die während der Kraftstoff-Voreinspritzung zugeführt wird, umfasst, so dass die Kraftstoffregelmittel einen inkrementellen Anstieg der während der nächsten Kraftstoff-Voreinspritzung zuzuführenden Kraftstoffmenge einleiten, wenn eine vorbestimmte Anzahl oder Aufeinanderfolge von Nichtakzeptanzsignalen durch die Vergleichsmittel erzeugt worden ist.

3. System nach Anspruch 2,
**dadurch gekennzeichnet, dass** das System Kraftstoffregelmittel zum Regeln von mindestens der Kraftstoffmenge, die während der Kraftstoff-Voreinspritzung zugeführt wird, umfasst, so dass die Kraftstoffregelmittel eine inkrementelle Abnahme der während der nächsten Kraftstoff-Voreinspritzung zuzuführenden Kraftstoffmenge einleiten, wenn eine vorbestimmte Anzahl von Akzeptanzsignalen durch die Vergleichsmittel erzeugt worden ist.

4. System nach Anspruch 1,
**dadurch gekennzeichnet, dass** das System umfasst:
zweite Meßmittel zum Messen der Größenordnung der Ionisierung in der Brennkammer während mindestens einer Haupteinspritzung, so dass ein zweiter Meßwert erhalten wird, der proportional zu der Größenordnung der Ionisierung während der Haupteinspritzung ist;
Mittel zum Einrichten der vorbestimmten Schwelle, die für den ersten Meßwert verwendet wird, wobei die eingerichtete vorbestimmte Schwelle von dem zweiten Meßwert abhängt.

5. System nach Anspruch 1,
**dadurch gekennzeichnet, dass** das System Mittel zum Bestimmen der Stellung des Motors in dem Verbrennungstakt umfasst, wobei der erste Meßwert während eines Meßfensters erhalten wird, das einem Meßfenster vorausgeht, das dazu verwendet wird, den zweiten Meßwert zu erhalten, wobei die Meßwerte in Zeit oder Kurbelwellenwinkel (d.h. Motorstellung) getrennt sind und ausschließlich von der Ionisierung während betreffender Meßfenster abhängen.

6. Verfahren zum Regeln der Kraftstoffeinspritzung in Verbrennungsmotoren (1), zum Feststellen und Regeln der Kraftstoff-Voreinspritzung, wobei die Kraftstoff-Voreinspritzung eingeleitet wird, bevor ein Kolben in dem Verbrennungsmotor den oberen Totpunkt (OT) erreicht und mindestens eine Kraftstoff-Haupteinspritzung sequentiell nach und getrennt von der Kraftstoff-Voreinspritzung eingeleitet wird, wobei mindestens eine Brennkammer des Verbrennungsmotors mit einem Ionisierungssensor ausgestattet ist, der in der Lage ist, den Ionisierungsgrad in der Brennkammer zu ermitteln,
**dadurch gekennzeichnet, dass** das Verfahren die Schritte umfaßt:
Detektieren von Ionisierung in der Brennkammer während der Voreinspritzung, so dass ein erster Meßwert erhalten wird, der proportional zu der Größenordnung der Ionisierung in der Brennkammer während der Voreinspritzung ist,
Vergleichen des ersten Meßwerts mit einer vorbestimmten Schwelle, und Erzeugen einer Akzeptanz, wenn der erste Meßwert über der vorbestimmten Schwelle liegt, und Erzeugen einer Nichtakzeptanz, wenn der erste Meßwert unterhalb der vorbestimmten Schwelle liegt;
Regeln zumindest der während der Kraftstoff-Voreinspritzung zugeführten Kraftstoffmenge in Abhängigkeit von den durch die Vergleichmittel erzeugten Nichtakzeptanzsignalen.

7. Verfahren zum Regeln der Kraftstoffeinspritzung in Verbrennungsmotoren (1) nach Anspruch 6,
**dadurch gekennzeichnet, dass** das Verfahren die Schritte umfasst:
Regeln zumindest der Kraftstoffmenge, die während der Kraftstoff-Voreinspritzung einer Brennkammer zugeführt wird, wenn eine vorbestimmte Anzahl oder Folge von Nichtakzeptanzsignalen durch die Vergleichsmittel für die Brennkammer erzeugt wurden, so dass die Kraftstoffmenge für eine folgende Kraftstoff-Voreinspritzung in die Brennkammer inkrementell erhöht wird.

8. Verfahren zum Regeln der Kraftstoffeinspritzung in Verbrennungsmotoren (1) nach Anspruch 7,
**dadurch gekennzeichnet, dass** das Verfahren die Schritte umfaßt:
Regeln zumindest der Kraftstoffmenge, die während der Kraftstoff-Voreinspritzung einer Brennkammer zugeführt wird, wenn eine vorbestimmte Anzahl von Akzeptanzsignalen durch die Vergleichsmittel für die Brennkammer und für aufeinanderfolgende Verbrennungen erzeugt worden ist, so dass die Kraftstoffmenge für eine nachfolgende Kraftstoff-Voreinspritzung in die Brennkammer inkrementell herabgesetzt wird.

9. Verfahren zum Regeln der Kraftstoffeinspritzung in Verbrennungsmotoren (1) nach Anspruch 6,
**dadurch gekennzeichnet, dass** das Verfahren die Schritte umfaßt:
Detektieren von Ionisierung in der Brennkammer auch während der Haupteinspritzung, so dass ein zweiter Meßwert erhalten wird, der proportional zu der Größenordnung der Ionisierung während der Haupteinspritzung ist,
Einrichten einer vorbestimmten Schwelle zum Vergleich auf der Grundlage des zweiten Meßwerts.

10. Verfahren zum Regeln der Kraftstoffeinspritzung in Verbrennungsmotoren (1) nach Anspruch 9,
**dadurch gekennzeichnet, dass** die vorbestimmte Schwelle als vorbestimmter Teil des zweiten Meßwerts, vorzugsweise im Bereich von 1 - 30 % des zweiten Meßwerts, eingerichtet wird.

## Revendications

1. Système permettant de commander l'injection de carburant dans des moteurs à combustion (1), pour la vérification et la commande de l'injection de carburant pilote, où l'injection de carburant pilote est lancée avant qu'un piston du moteur à combustion n'atteigne le Point Mort Haut (PMH) et au moins une injection de carburant principale est lancée de manière séquentielle après et est distincte de ladite injection de carburant pilote,
**caractérisé en ce que** le système comprend :
des moyens de détection permettant de détecter l'ionisation à l'intérieur de la chambre de combustion ;
des premiers moyens de mesure permettant de mesurer l'ordre de l'ionisation à l'intérieur de la chambre de combustion au cours de l'injection pilote, de sorte qu'une première valeur mesurée soit obtenue en étant proportionnelle à l'ordre de l'ionisation au cours de l'injection pilote,
des moyens de comparaison comparant la première valeur mesurée à un seuil prédéterminé, lesdits moyens de comparaison établissant un signal d'acceptation si la première valeur mesurée est au-dessus du seuil prédéterminé, et établissant un signal de non-acceptation si la première valeur mesurée est au-dessous du seuil prédéterminé;
des moyens de commande de carburant commandant au moins la quantité de carburant délivrée au cours de l'injection de carburant pilote, de sorte que les moyens de commande de carburant lancent une augmentation incrémentielle de la quantité de carburant à délivrer au cours de la prochaine injection de carburant pilote, dépendant desdits signaux de non-acceptation établis par lesdits moyens de comparaison.

2. Système selon la revendication 1, **caractérisé en ce que** le système comprend des moyens de commande de carburant permettant de commander au moins la quantité de carburant délivrée au cours de l'injection de carburant pilote, grâce auquel les moyens de commande de carburant lancent une augmentation incrémentielle de la quantité de carburant à délivrer au cours de la prochaine injection de carburant pilote si un nombre ou une séquence prédéterminé de signaux de non-acceptation a été établi par lesdits moyens de comparaison.

3. Système selon la revendication 2, **caractérisé en ce que** le système comprend des moyens de commande de carburant permettant de commander au moins la quantité de carburant délivrée au cours de l'injection de carburant pilote, grâce auquel les moyens de commande de carburant lancent une diminution incrémentielle de la quantité de carburant à délivrer au cours de la prochaine injection de carburant pilote si un nombre prédéterminé de signaux d'acceptation a été établi par lesdits moyens de comparaison.

4. Système selon la revendication 1, **caractérisé en ce que** le système comprend :
des seconds moyens de mesure permettant de mesurer l'ordre de l'ionisation à l'intérieur de la chambre de combustion au cours d'au moins une injection principale, par lesquels une seconde valeur mesurée est obtenue en étant proportionnelle à l'ordre de l'ionisation au cours de l'injection principale ;
des moyens permettant d'établir le seuil prédéterminé utilisé pour la première valeur mesurée, ledit seuil prédéterminé établi dépendant de la seconde valeur mesurée.

5. Système selon la revendication 1, **caractérisé en ce que** le système comprend des moyens permettant de déterminer la position du moteur dans le cycle de combustion, dans lequel la première valeur mesurée est obtenue pendant une fenêtre de mesure qui précède une fenêtre de mesure utilisée pour obtenir la seconde valeur mesurée, lesdites valeurs de mesure étant séparées dans le temps ou en angles de vilebrequin (c'est-à-dire la position du moteur), et dépendant exclusivement de l'ionisation pendant la fenêtre de mesure respective.

6. Procédé permettant de commander l'injection de carburant dans des moteurs à combustion (1), pour la vérification et la commande de l'injection de carburant pilote, où l'injection de carburant pilote est lancée avant qu'un piston du moteur à combustion n'atteigne le Point Mort Haut (PMH) et au moins une injection de carburant principale est lancée de manière séquentielle après et est distincte de ladite injection de carburant pilote, dans lequel au moins une chambre de combustion du moteur à combustion est équipée d'un capteur d'ionisation capable de détecter le degré d'ionisation dans la chambre de combustion, **caractérisé en ce que** le procédé comprend les étapes de :
détection de l'ionisation à l'intérieur de la chambre de combustion au cours de l'injection pilote, par laquelle une première valeur mesurée est obtenue en étant proportionnelle à l'ordre de l'ionisation dans la chambre de combustion au cours de l'injection pilote,
comparaison de ladite première valeur mesurée à un seuil prédéterminé, et établissement d'une acceptation la première valeur mesurée est au-dessus du seuil prédéterminé, et établissement d'une non-acceptation si la première valeur mesurée est au-dessous du seuil prédéterminé ;
commande d'au moins la quantité de carburant délivré au cours de l'injection de carburant pilote en fonction desdits signaux de non-acceptation établis par lesdits moyens de comparaison.

7. Procédé permettant de commander l'injection de carburant dans des moteurs à combustion (1) selon la revendication 6, **caractérisé en ce que** le procédé comprend les étapes de :
commande d'au moins la quantité de carburant délivré à une chambre de combustion au cours de l'injection de carburant pilote si un nombre ou une séquence prédéterminé de signaux de non-acceptation a été établi par lesdits moyens de comparaison de ladite chambre de combustion, par laquelle ladite quantité de carburant d'une injection de carburant pilote suivante dans ladite chambre de combustion est augmentée de manière incrémentielle.

8. Procédé permettant de commander l'injection de carburant dans des moteurs à combustion (1) selon la revendication 7, **caractérisé en ce que** le procédé comprend les étapes de :
commande d'au moins la quantité de carburant délivré à une chambre de combustion au cours de l'injection de carburant pilote si un nombre prédéterminé de signaux d'acceptation a été établi par lesdits moyens de comparaison de ladite chambre de combustion et pour plusieurs combustions consécutives, par laquelle ladite quantité de carburant d'une injection de carburant pilote suivante dans ladite chambre de combustion est diminuée de manière incrémentielle.

9. Procédé permettant de commander l'injection de carburant dans des moteurs à combustion (1) selon la revendication 6, **caractérisé en ce que** le procédé comprend les étapes de :
détection également de l'ionisation à l'intérieur de la chambre de combustion au cours de l'injection principale, par laquelle une seconde valeur mesurée est obtenue en étant proportionnelle à l'ordre de l'ionisation au cours de l'injection principale,
l'établissement d'un seuil prédéterminé pour la comparaison sur la base de la seconde valeur mesurée.

10. Procédé permettant de commander l'injection de carburant dans des moteurs à combustion (1) selon la revendication 9, **caractérisé en ce que** le seuil prédéterminé est établi comme une partie prédéterminée de la seconde valeur mesurée, de préférence dans la gamme de 1 - 30 % de la seconde valeur mesurée.
